# EUROPEAN PATENT APPLICATION

(11) **EP 2 409 826 A1**
(43) Date of publication of application: **25.01.2012**
(21) Application number: 10007469.9
(22) Date of filing: 19.07.2010
(51) Int. Cl.: B29C 63/02, B32B 37/10, B44C 1/16

(54) **Device and method for applying a pattern on a support means**

(71) Applicant: Rapid Applicator B.V., 5151 DK Drunen (NL)
(72) Inventor: The designation of the inventor has not yet been filed
(74) Representative: Renkema, Jaap

(57) **Abstract**

The present invention relates to a device for applying a predetermined pattern onto a support means, the device comprising a novel a transmission means(8) having a first rotating member (9) and a second rotating member (10) connected by a first transporting means (11) and a second transporting means (12); the first rotating member (9) being arranged at a first short side (13) of the laminating table (1) and substantially perpendicular to the first long side (4) of the laminating table (1); the first rotating member (9) having a first end portion (9a) and a second end portion (9b); the second rotating member (10) being arranged at a second short side (13') of the laminating table (1) and substantially parallel to the first rotating member (9); the second rotating member (10) having a first end portion (10a) and a second end portion (10b); the first transporting means (11) being moveably arranged to run over the first end portion (9a) of the first rotating member (9) and the first end portion (10a) of the second rotating member (10) and fixedly connected to the first movable device (2); the second transporting means (12) being moveably arranged to run over the second end portion (9b) of the first rotating member (9) and the second end portion (10b) of the second rotating member (10) and fixedly connected to the second movable device (2').

## Description

The present invention relates to a device for applying a predetermined pattern onto a support means, the device comprising:
- a laminating table having a flat laying-out surface;
- a first movable device being moveably arranged at a first fixed control and carrier section, the first fixed control and carrier section being arranged at a first long side of the laminating table;
- a second movable device being moveably arranged at a second fixed control and carrier section, the second fixed control and carrier section being arranged at a second long side of the laminating table, the second long side of the laminating table being opposite and substantially parallel to the first long side of the laminating table;
- a press device comprising at least one press roll rotatably journalled at its ends and operating and control means for moving the press roll between an upper inoperative position and a lower operative position in contact with the surface of the table and for controlling the pressure of the press roll against the table surface.

Such a device is disclosed in EP 0 986 459. The device disclosed in EP 0 986 459 is characterized in that it comprises a traverse beam spanning the laying-out surface, connecting the first and second movable devices as bridge and causes the movable devices to move in a synchronized parallel way during a process of laminating a substrate.

A disadvantage of the known device is that perfect synchronized running of the first and the second movable devices is difficult to obtain, especially when the device is operated by one person standing at one long side of the laminating table. In the device of EP 0 986 459, the synchronization of the running of the first and the second movable device is achieved by a horizontal traverse beam arranged above the laminating table and connecting the first and the second movable devices via two substantially vertical pillars. By moving the first movable device, the motion is transmitted to the second movable device via the substantially vertical pillars and the horizontal traverse beam, and vice versa. Due to torsion of the horizontal traverse beam, the running of the second moveable device is poorly synchronized with the running of the first moveably device. The result of this is that the press roll runs unevenly across the pattern to be applied onto the substrate in the laminating process, which in turn leads to poorly transferred patterns, resulting in signs of inferior quality.

Another disadvantage of the known device is that during applying the pattern onto the substrate, the foil bearing the pattern has to be inserted between the press roll and the horizontal traverse beam. Especially with large foils this step may cause damaging of the foil. The inconvenience of performing this step also leads to decreased productivity of the person operating the device.

It is therefore an object of the present invention to provide a device for applying a predetermined pattern onto a support means that omits or at least mitigates at least a part of the above stated disadvantages.

In the context of the present invention, a predetermined pattern is broadly construed as being a single colored (uni-color) image, for example a solid area colored with a single color; or an image, which for example can be produced with screen printing or digital printing. Examples of digital printing techniques are thermal transfer printing and various ink-jet technologies, for example wet solvent ink-jet printing, UV-curable ink-jet printing, hotmelt ink-jet printing.

The object is at least partially achieved by providing a device for applying a predetermined pattern onto a support means, according to the preamble, characterized in that the device comprises a transmission means having a first rotating member and a second rotating member connected by a first transporting means and a second transporting means; the first rotating member being arranged at a first short side of the laminating table and substantially perpendicular to the first long side of the laminating table; the first rotating member having a first end portion and a second end portion; the second rotating member being arranged at a second short side of the laminating table and substantially parallel to the first rotating member; the second rotating member having a first end portion and a second end portion; the first transporting means being moveably arranged to run over the first end portion of the first rotating member and the first end portion of the second rotating member and fixedly connected to the first movable device; the second transporting means being moveably arranged to run over the second end portion of the first rotating member and the second end portion of the second rotating member and fixedly connected to the second movable device.

The transmission means according to the present invention provides a smooth and highly accurate transmission of the movement of the first movable device to the second movable device.

With such an arrangement, the horizontal traverse beam connecting the first and the second movable device is no longer necessary to provide parallel and synchronized running of both movable devices. The new transmission means according to the present invention solves or at least mitigates the torsion problem of the conventional movable devices bridged by a horizontal traverse beam.

During the process of applying a pattern onto a substrate, a foil bearing a pattern, e.g. printed with an ink-jet printer, does not have to be inserted between the press roll and the horizontal traverse beam anymore, but can be easily flipped over the press roll. Hence it becomes easier to operate the laminating device by a single person and with a higher productivity of that single person.

Such a device may be used for applying a predetermined pattern, which may be a print on a foil, a laminate or vinyl. The foil, laminate or vinyl may be self-adhesive.

In an embodiment, the first movable device and the second movable device may be linearly movable devices. The movable devices run in a linear way along the long sides of the laminating table.

In an embodiment, the first rotating member and the second rotating member, comprise rotating elements being fixedly connected to the end portions of the first and second rotating members.

In an embodiment the rotating elements comprise gearwheels.

This embodiment has the advantage that the accuracy of the synchronization of the running of the first movable device and the second movable device can be adjusted to the desired accuracy level by selecting the gearwheels accordingly. Gear wheels having a larger diameter combined with a larger number of teeth increase the accuracy level of the transmission means.

In an embodiment, the first transporting means and the second transporting means of the device according to the present invention are selected from the group consisting of: a belt, a toothed belt, a chain and a ribbon.

In an embodiment the flat laying-out surface of the laminating table of the device according to the present invention comprises at least two flat plates.

An advantage of having multiple plates is that plates may be substituted or handled by a single person.

The at least two flat plates may be of any suitable plate material, for example wood, metal (e.g. steel, aluminum), glass or a polymer plate material (e.g. polymethylmethacrylate, polyvinylchloride).

In an embodiment the at least two flat plates of the flat laying-out surface of the laminating table are made of a translucent material, preferably the at least two flat plates are made of glass, more preferably of security or annealed glass.

An advantage of this is that the working area can be lit from the back.

In an embodiment each plate is supported by at least three supporting elements, of which at least two are adjustable, such that the plate can be leveled.

In an embodiment at least one of the supporting elements per plate is adjustable for leveling the plate.

In an embodiment the supporting elements are made of an elastomeric material.

In an embodiment, the device according to the present invention, comprises a first means for extending the length of the laminating table, comprising a first extending arm and a second extending arm, both extending arms being movably arranged at the first short side of the laminating table, the first means for extending the length of the laminating table optionally comprising a first support means.

In an embodiment, the device according to the present invention, comprises a second means for extending the length of the laminating table, comprising a third extending arm and a fourth extending arm, both extending arms being movably arranged at the second short side of the laminating table, the first means extending for extending the length of the laminating table optionally comprising a second support means.

An advantage of these arrangements is that the operating length of the laminating table can be extended without the need for a longer laying-out surface of the laminating table. The substrates may be supported by the arrangement of extending arms, so longer patterns may be applied to longer substrates. With this arrangement it is also possible that long patterns may be more easily applied to multiple panels without the need of a partial image overlap. A first part of the pattern may be applied to a first panel, which may be moved on and supported by the first or the second support means. Then a second part of the pattern may be applied to a second panel, positioned against the first panel. After applying the second part of the pattern on the second panel, the first and second parts of the pattern can be separated by cutting in between the first and the second panel. Of course this principle can also be applied to multiple panels.

In an embodiment, the device according to the present invention, comprising a first holder arranged at the first movable device and a second holder arranged at the second movable device, the first holder and the second holder being arranged for accommodating a third rotating member.

In an embodiment, the device according to the present invention, the third rotating member comprises an axis for holding a roll of sheet material.

The invention will now be described in detail with reference to the following Figures.
FIG. 1A shows a schematic representation of an embodiment of a device for applying a predetermined pattern onto a support means according to the present invention.
FIG. 1B shows a detail of Fig. 1A, indicated with A.
FIG. 1C shows a schematic representation of a movable device of the device of Fig. 1A.
FIG. 2A schematically shows a top view of the device shown in Fig. 1.
FIG. 2B schematically shows a detail of the top view shown in Fig. 2A, indicated with Q.
FIG. 2C schematically shows a side view of the detail of Fig. 2B.
FIG. 3 schematically shows a cross sectional view along line B-B of the device shown in FIG. 2.
FIG. 4 schematically shows an enlarged detailed partial view of FIG. 3.
FIG. 5 shows a schematic representation of an embodiment of a device for applying a predetermined pattern onto a support means according to the present invention
FIG. 6A schematically shows a top view of the device shown in FIG. 5.
FIG. 6B schematically shows a detail of the top view shown in FIG. 6A, indicated with R.
FIG. 6C schematically shows a side view of the detail of FIG. 6B.
FIG. 7 schematically shows a cross sectional view along line D-D of the device shown in FIG. 6.
FIG. 8 schematically shows an enlarged detailed partial view of FIG. 7.

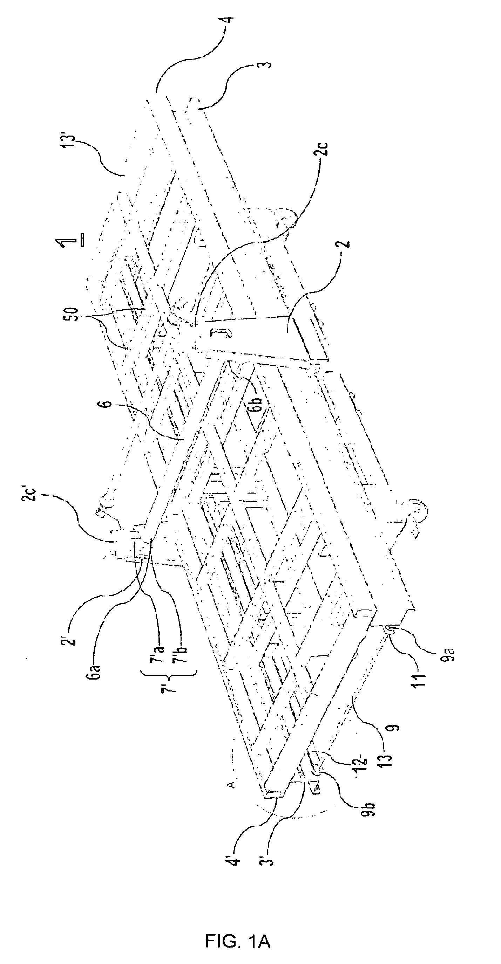

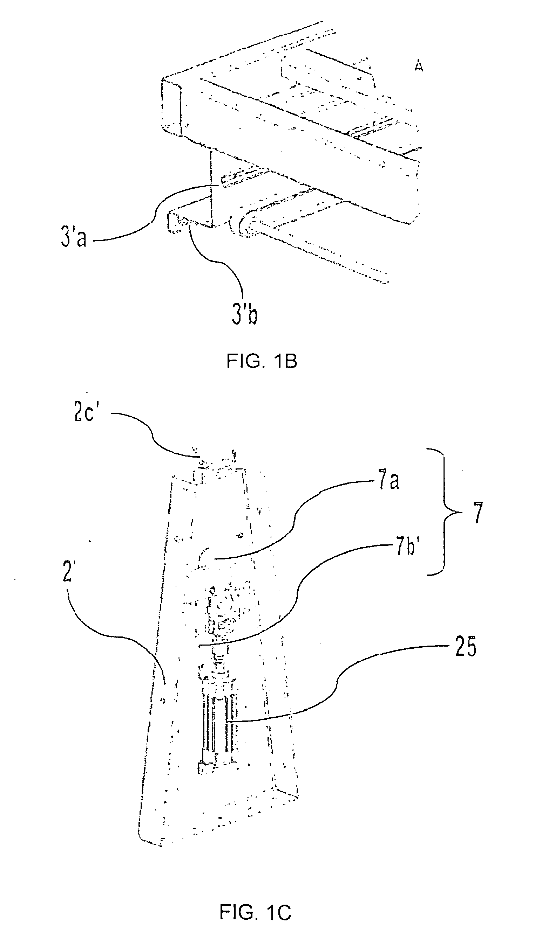

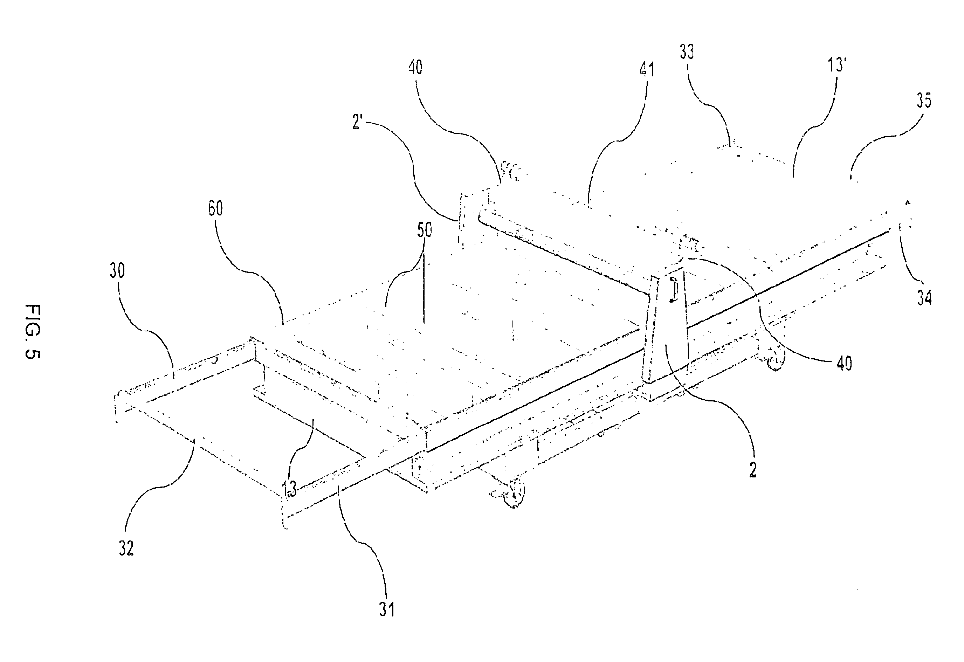

A first example of a device for applying a predetermined pattern onto a support means according to the present invention, from now on termed 'the device', is shown in FIGS. 1-4. A second examples of 'the device' is shown in FIGS. 5-8.

### EXAMPLE 1

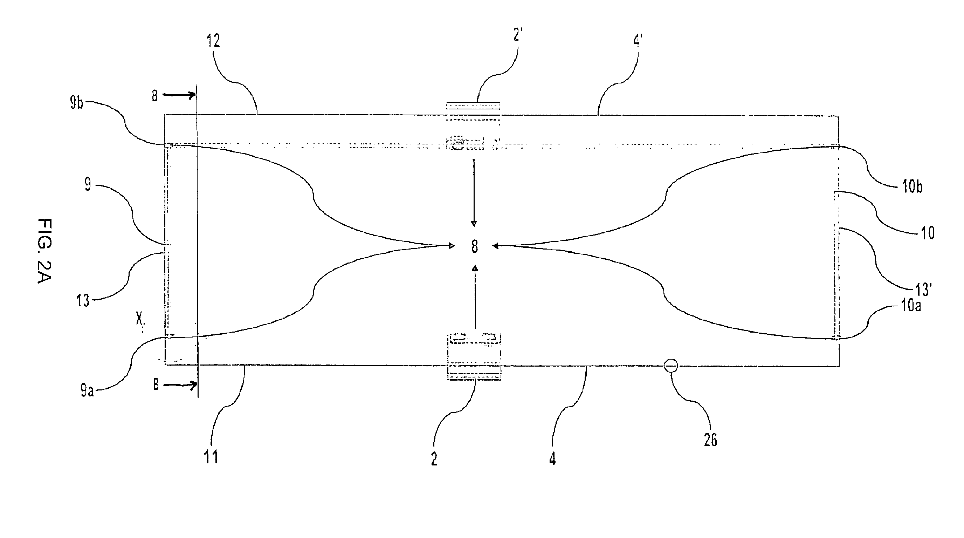

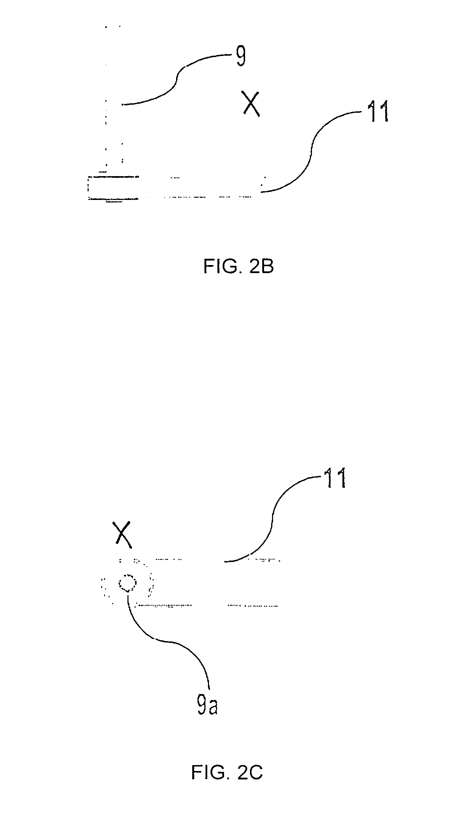

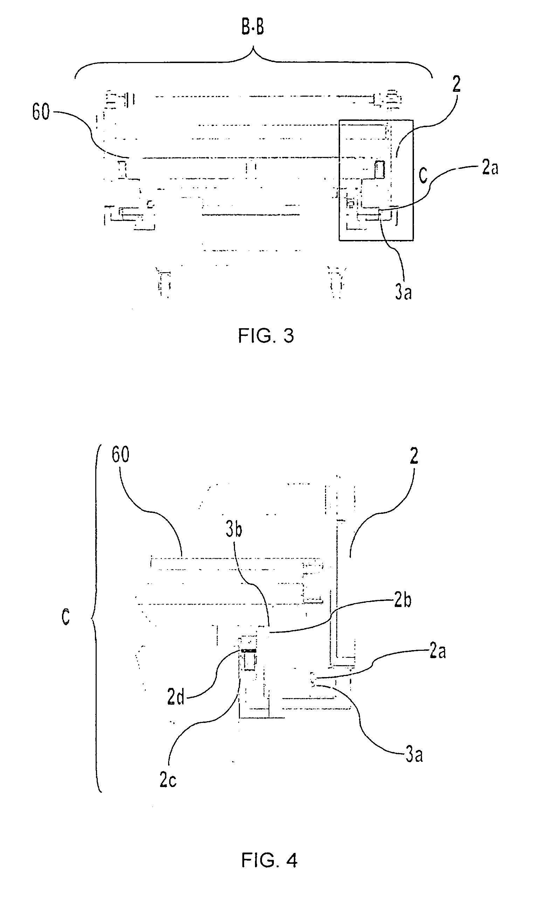

'The device' comprises a laminating table 1 having a flat laying out surface. The laminating table 1 comprises a frame 26 (FIG. 2). The flat laying out surface is created by one or more translucent plates 60 (FIGS. 3 and 4 ) which are supported by support elements 50 (FIG 1).

The frame of the laminating table 1 comprises two long sides 4 and 4' which are substantially parallel to each other. At the long sides 4 and 4', two fixed control and carrier sections, 3 and 3' respectively, are arranged which in this example consist of especially formed plate material.

The fixed control and carrier section 3 comprises two rails 3a and 3b, for accommodating counterparts 2a and 2b (FIG. 4) of a first movable device 2. Fixed control and carrier section 3' also has these rails 3'a and 3'b, which are shown in FIG 1B.

The first movable device 2 comprises means 2a and 2b (FIG. 4) and the first movable device 2 is arranged such that means 2a and 2b cooperate with rails 3a and 3b, respectively. This arrangement provides a stable and linear movement of the movable device 2 along the first long side 4 of the laminating table 1 (FIG 1A). Preferably, means 2a and 2b comprise bearings for smooth movement of the movable device, along long side 4.

A second movable device 2' is a mirror image of the first movable device and comprises the same components as the first movable device 2.

The device further comprises a press roll 6, which is movably arranged between the first movable device 2 and the second movable device 2'. The press roll 6 can freely rotate around its longitudinal axis. The press roll 6 can be moved from an upper inoperative position 7a to a lower operative position 7b, by simultaneously lowering the first end portion of the press roll 6a and the second end portion of the press roll 6b through slots 7' and 7 respectively, arranged in the second movable device 2' and the first movable device 2 respectively. The first end 6a of the press roll 6 is rotatably arranged on a device 6c which is arranged at the end of a pneumatic cylinder 25 (see FIG 1 C). The same arrangement is provided for at the second end 6b of the press roll 6. The simultaneous moving operation of both ends of the press roll can be performed by a single action, by operating switch 2c or 2'c which is arranged on both movable devices 2 and 2', respectively. The vertical movement of the press roll from the upper to the lower position is controlled by pneumatic cylinders 25 of which one is shown in FIG 1C.

The device according Example 1 of the present invention comprises a transmission means 8. The transmission means comprises a first rotating member 9, a second rotating member 10. Both rotating members are operatively and movably connected to each other by a first transporting means 11 and a second transporting means 12 (best shown in FIG 2).

The first transporting means 11 is movably arranged to run over the first end portion 9a of the first rotating member 9 and the first end portion 10a of the second rotating member 10. The second transporting means 12 is movably arranged to run over the second end portion 9b of the first rotating member 9 and the second end portion 10b of the second rotating member 10.

Rotating members 9 and 10 are arranged at the opposite short sides of the laminating table 1. The transporting means 11 and 12 are operatively connected to movable devices 2 and 2' respectively, by a clamping means (the connection between movable device 2 and transporting means 11 is shown in FIG 4, 2d).

The transporting means 11 and 12 may be an endless (toothed) belt, chain, ribbon, or rope. In this example the transporting means are toothed belts, that run over gear wheels arranged at the ends of the rotating members 9 and 10.

In this example the transmission means is arranged at the inside of the frame of the laminating table (see FIGS 1 and 2). Bearings may be provided for at the end of the rotating means, for enabling free rotation of the rotating means.

The transmission means works as follows:
When an operator moves movable device 2 along the first long side 4 of the laminating table 1, the transporting means 11 moves as well, because the movable device 2 is fixedly connected by clamping means 2d (FIG 4). The linear movement of the movable device is transformed into rotating movements of rotating members 9 and 10. Then the second transporting means 12 runs over the second ends 9b and 10b of the rotating members 9 and 10 respectively. Because the second movable device 2' is fixedly connected to the second transporting means 12 by a clamping means, similar to clamping means 2d, the second moveable device 2' moves along the second long side 4' of the laminating table 1. Thus by moving either one of the movable devices 2 or 2' along the first or second long side 4 or 4' respectively, the other movable device moves simultaneously, parallel and in the same direction.

In conventional laminating equipment, both movable devices were connected by a traverse beam arranged above the press roll 6, such that a bridge is formed. Upon moving the bridge along the table, either two operators are required to move the first and the second movable devices along the long edges of the laminating table, or the centre of the moving force must be exerted in the middle of the bridge (i.e. between the two movable devices) to prevent torsion in the bridge. The latter is rather difficult in the case of broad laminating tables (i.e. tables having a width exceeding approximately 2.5 times the length of an average human arm). Torsion of the bridge arrangement in conventional laminating tables may cause uneven running of the press roll over the substrate to be laminated, possibly creating shear forces between the substrate and the laminating foil. The resulting laminate may be of inferior quality.

The above described disadvantage of conventional laminating tables is overcome by a laminating table comprising a transition means according to the present invention.

### EXAMPLE 2

The most important difference between the device according to example 1 and example 2 is the arrangement of the transmission means 8. All other parts are more or less the same as described before in example 1 and therefore not further discussed here. The numbers in FIGS 5-8 correspond to the description given in example 1.

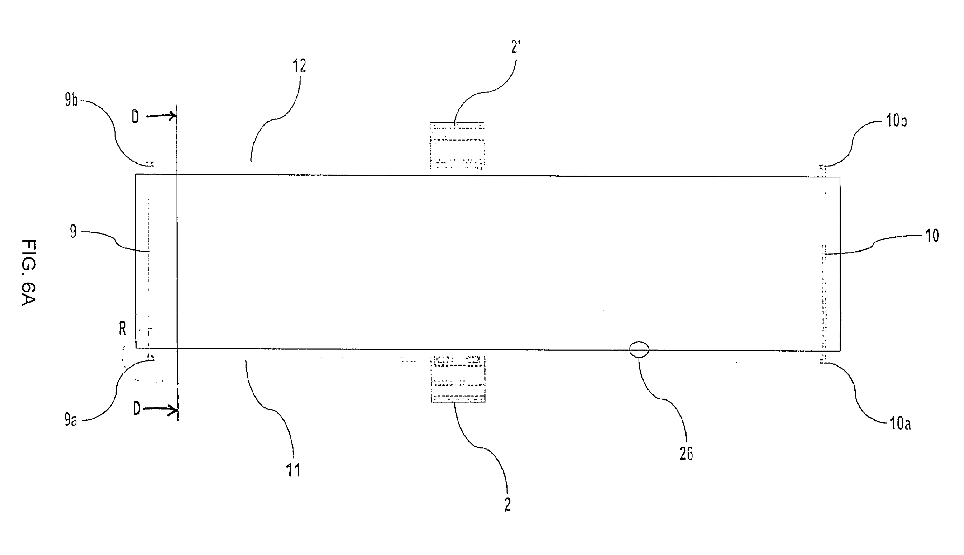

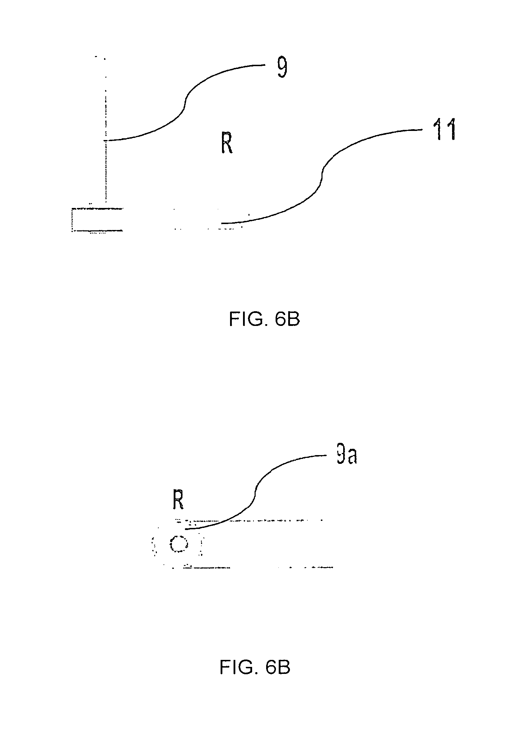

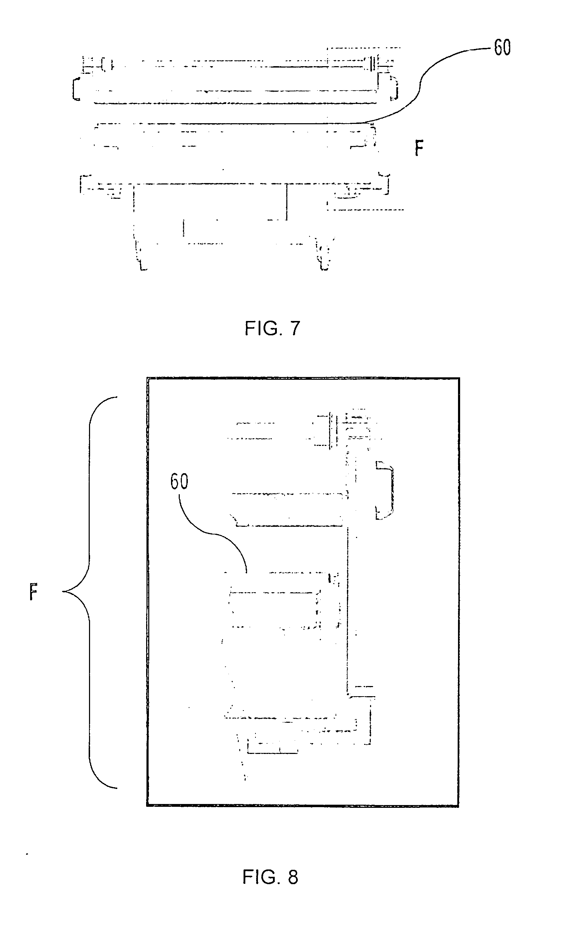

FIGS 6 and 7 show that the ends 9a, 9b, 10a and 10b of the rotating members 9 and 10 are located outside the frame of the laminating table 1. Thus, rotating members 9 and 10 are arranged through holes in the frame, optionally equipped with bearings for smooth rotation of the rotating members. Transporting means 11 runs over the first end 9a of rotating means 9 and over the first end 10a of rotating means 10. Transporting means 12 runs over the second end 9b of rotating means 9 and over the second end 10b of rotating means 10. The transporting means 11 and 12 are therefore also arranged outside the frame of laminating table 1.

In this example, the fixed control and carrier section 3 comprises a protrusion 3c arranged on the frame of the laminating table 1.

The first movable device 2 is fixedly connected to the first transporting means 11, by a clamping means similar to the clamping means of example 1.

The transmission means according to this example works in a similar way than is described in example 1.

The device optionally comprises extending arms 30, 31, 33 and 34, which are shown in FIG 5. The use of extending arms is however not limited to the device according to example 2 and may also be present in the device according to example 1. These extending arms can be used to extend the length of the laminating table 1. Large substrates to be laminated can be supported by a means 32, for example a roller, extending between the end of the first extending arm 30 and the end of the second extending arm 31. Extending arms 30 and 31 are arranged at the first short side 13 of the laminating table 1. Means 32 can also be used to hold a roll of laminating foil. A similar arrangement may be provided for at the second short side 13' of the laminating table 1, extending arms 33 and 34 and means 32, respectively.

When performing a laminating action, a substrate is placed on the flat surface of the laminating table 1. A predetermined pattern (e.g. printed on a foil comprising a printable surface and an adhesive back side provided with a backing foil and optionally a protecting laminating foil on top of the printed surface) is placed on top of the substrate with the image (predetermined pattern) facing upwards. The foil comprising the predetermined pattern and the substrate are aligned. The movable devices 2 and 2' are moved substantially to the middle of the image and the press roll (6) is lowered onto the laminating foil, exerting enough pressure to keep the foil and the substrate aligned and in place.

A first part of the foil comprising the predetermined pattern is folded over the press roll 6 and the backing foil is carefully cut and removed. Then the movable devices 2 and 2' are moved in a first direction, such that the first part of the laminating foil is fixed to the substrate. Then the movable devices are moved back to substantially the middle of the image, the second part of the foil comprising the predetermined pattern is folded over the press roll 6 and the remainder of the backing foil is removed. Finally, the movable devices 2 and 2' are moved in a second direction, such that the second part of the foil comprising the predetermined pattern is fixed to the substrate. It is also possible that the substrate comprises an adhesive layer and backing foil. In that case, the substrate is placed on the laminating table with the backing foil facing upwards. The above described process is carried out in a similar way. The only difference is that the backing foil must be removed from the substrate instead of the foil comprising the predetermined pattern.

When large patterns need to be applied to large surfaces, the backing foil may be removed during the movements of the movable devices 2 and 2' in the first and the second directions.

The above described process may be repeated to apply one or more protective layers in the form of foils, especially when the predetermined pattern on a laminating foil does not have protective layers of itself.

## Claims

1. A device for applying a predetermined pattern onto a support means, the device comprising:
- a laminating table (1) having a flat laying-out surface;
- a first movable device (2) being moveably arranged at a first fixed control and carrier section (3), the first fixed control and carrier section (3) being arranged at a first long side (4) of the laminating table (1);
- a second movable device (2') being moveably arranged at a second fixed control and carrier section (3'), the second fixed control and carrier section (3') being arranged at a second long side (4') of the laminating table (1), the second long side (4') of the laminating table (1) being opposite and substantially parallel to the first long side (4) of the laminating table (1);
- a press device (5) comprising at least one press roll (6) rotatably journalled at its ends and operating and control means for moving the press roll between an upper inoperative position (7a) and a lower operative position (7b) in contact with the surface of the table and for controlling the pressure of the press roll against the table surface;
**characterized in that** the device comprises a transmission means (8) having a first rotating member (9) and a second rotating member (10) connected by a first transporting means (11) and a second transporting means (12); the first rotating member (9) being arranged at a first short side (13) of the laminating table (1) and substantially perpendicular to the first long side (4) of the laminating table (1); the first rotating member (9) having a first end portion (9a) and a second end portion (9b); the second rotating member (10) being arranged at a second short side (13') of the laminating table (1) and substantially parallel to the first rotating member (9); the second rotating member (10) having a first end portion (10a) and a second end portion (10b); the first transporting means (11) being moveably arranged to run over the first end portion (9a) of the first rotating member (9) and the first end portion (10a) of the second rotating member (10) and fixedly connected to the first movable device (2); the second transporting means (12) being moveably arranged to run over the second end portion (9b) of the first rotating member (9) and the second end portion (10b) of the second rotating member (10) and fixedly connected to the second movable device (2').

2. The device according to claim 1, wherein the first rotating member (9) and the second rotating member (10), comprise rotating elements being fixedly connected to the end portions (9a, 9b, 10a and 10b) of the first and second rotating members (9 and 10).

3. The device according to claim 2, wherein the rotating elements comprise gearwheels.

4. The device according to any one of claims 1-3, wherein the first transporting means (11) and the second transporting means (12) are selected from the group consisting of: a belt, a toothed belt, a chain, a ribbon and a rope.

5. The device according to any one of the previous claims, wherein the flat laying-out surface of the laminating table (1) comprises at least two flat plates.

6. The device according to claim 5, wherein the at least two flat plates are made of a translucent material.

7. The device according to any one of claims 5-6, wherein the at least two flat plates are made of glass.

8. The device according to any one of claims 5-7, wherein each plate is supported by at least threesupporting elements (50).

9. The device according to claim 8, wherein at least one of the supporting elements (50) per plate is adjustable for leveling the plate.

10. The device according to any one of claims 8-9, wherein the supporting elements (50) are made of a elastomeric material.

11. The device according to any one of the previous claims, comprising a first means for extending the length of the laminating table, comprising a first extending arm (30) and a second extending arm (31), both extending arms being movably arranged at the first short side (13) of the laminating table (1), the first means for extending the length of the laminating table optionally comprising a support means (32).

12. The device according to claim 11, comprising a second means for extending the length of the laminating table, comprising a third extending arm (33) and a fourth extending arm (34), both extending arms being movably arranged at the second short side (13') of the laminating table (1), the first means for extending the length of the laminating table optionally comprising a support means (35).

13. The device according to any one of the previous claims, comprising a first holder (40) arranged at the first movable device (2) and a second holder (40') arranged at the second movable device (2'), the first holder and the second holder being arranged for accommodating a third rotating member (41).

14. The device according to claim 13, wherein the third rotating member (41) comprises an axis for holding a roll of sheet material.
